# DEMANDE DE BREVET EUROPEEN

(11) **EP 1 030 198 A1**
(43) Date de publication de la demande: **23.08.2000**
(21) Numéro de dépôt: 00400057.6
(22) Date de dépôt: 12.01.2000
(51) Int. Cl.: G02B 6/16

(54) **Fibre optique à saut d'indice à large bande**

(30) Priorité: 18.02.1999 FR 9902027
(71) Demandeur: ALCATEL, 75008 Paris (FR)
(72) Inventeur: Rousseau, Jean-Claude, 78400 Chatou (FR); Hertz, Michel, 75116 Paris (FR); Paillot, Marianne, 92600 Asnieres (FR); Sauvageon, Raphaelle Béthanie, 74230 Thones (FR); Chariot, Jean-François, 78160 Marly le Roi (FR)
(74) Mandataire: Laroche, Danièle

(57) **Abrégé**

L'invention propose une fibre optique à saut d'indice, présentant une longueur d'onde λ₀ d'annulation de la dispersion chromatique inférieure à 1280 nm, voire à 1250 nm.

La fibre de l'invention peut être utilisée pour des transmissions à multiplexage en longueurs d'onde, non seulement dans la fenêtre située autour de 1550 nm, mais aussi dans la fenêtre située autour de 1300 nm. En effet la valeur de la dispersion chromatique dans cette deuxième fenêtre rend possibles les transmissions, sans que les effets non linéaires ne soient trop pénalisants.

L'invention concerne aussi un système de transmission à fibre optique, utilisant comme fibre de ligne une telle fibre.

## Description

La présente invention concerne le domaine des transmissions par fibre optique, et notamment les systèmes de transmission par fibre optique à multiplexage en longueurs d'onde.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction au rayon r et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueurs d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une compensation chromatique cumulée sensiblement nulle sur la liaison, de sorte à limiter l'élargissement des impulsions. Une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de sorte à éviter ou limiter les distorsions entre les canaux du multiplex.

On utilise classiquement comme fibre de ligne pour les systèmes de transmission à fibres optiques des fibres à saut d'indice. La demanderesse commercialise ainsi sous référence ASMF 200 une fibre monomode à saut d'indice présentant une longueur d'onde λ₀ d'annulation de la dispersion chromatique entre 1300 et 1320 nm, et une dispersion chromatique inférieure en valeur absolue à 3,5 ps/(nm.km) dans une plage de 1285-1330 nm, et qui vaut 18 ps/(nm.km) à 1550 nm. La pente de dispersion chromatique à 1550 nm est de l'ordre de 0,05 ps/(nm².km).

Une fibre à saut d'indice présentant un coeur d'indice supérieur de 5.10⁻³ à l'indice de la gaine présente typiquement une valeur λ₀ d'annulation de la dispersion chromatique voisine de 1310 nm. Elle peut être obtenue en dopant de la silice au germanium, ce qui a pour effet de faire croître la valeur de la longueur d'onde λ₀ pour laquelle la dispersion chromatique s'annule. La dispersion chromatique est nulle dans la silice pour une valeur de longueur d'onde λ₀ de 1285 nm; le dopage au germanium fait passer cette valeur à 1310 nm.

Il est connu que les effets non linéaires sont d'autant moins importants que la surface effective de la fibre est importante. Ainsi, M. Kato et autres, A new design for dispersion shifted fiber with an effective core area larger thon 100 µm² and good bending characteristics, ThK2, OFC'98 Technical Digest, explique que les effets non linéaires dans les fibres pourraient devenir les limitations dominantes du point de vue de la capacité et de la distance de transmission pour des systèmes de transmission amplifiés à haute capacité et sur de longues distances. Ce document précise qu'une solution possible consiste à augmenter l'aire effective des fibres, ce qui permet d'obtenir une puissance supérieure et un intervalle plus important entre répéteurs. Ce document propose une fibre présentant un profil coaxial, entouré d'un piédestal, avec une aire effective de 146 µm² et une longueur d'onde λ₀ pour laquelle la dispersion chromatique s'annule à 1500 nm. La dispersion chromatique à 1550 nm est faible, et la pente de dispersion à cette longueur d'onde est de 0,09 ps/nm.km.

D. Bayart, S. Gauchard, 50 GHZ channel spacing analysis in Nx2,5 Gbit/s systems, OFC'98 Technical Digest WD2 décrit un système de transmission à multiplexage en longueurs d'onde, comprenant 32 à 80 canaux ou plus et plus ayant un débit unitaire de 2,5 Gbit/s. Dans ce document, les canaux sont disposés dans une plage de longueurs d'onde de 1530 à 1560 nm, avec un espacement de 50 GHz, soit 0,4 nm entre deux canaux adjacents.

Dans les systèmes de transmission à multiplexage en longueurs d'onde connus, les signaux sont transmis dans cette plage de longueurs d'onde, mais pas dans la plage de longueurs d'onde voisine de 1300 nm, appelée aussi deuxième fenêtre.

L'invention propose, dons un système de transmission à multiplexage en longueurs d'onde, d'utiliser non seulement la fenêtre de transmission située autour de 1550 nm, mais aussi la fenêtre de transmission située autour de 1300 nm. Pour limiter les effets non-linéaires, l'invention propose une fibre à saut d'indice dont la dispersion chromatique est supérieure ou égale à 2 ps/(nm.km) pour des longueurs d'onde au-dessus de 1280 nm; par rapport à une fibre à saut d'indice connue, ceci peut être obtenu en faisant diminuer la valeur de la longueur d'onde λ₀ pour laquelle la dispersion chromatique s'annule.

Plus précisément, l'invention propose une fibre optique à saut d'indice, présentant une longueur d'onde d'annulation de la dispersion chromatique inférieure ou égale à 1280 nm.

Dans un mode de réalisation, la fibre présente une longueur d'onde d'annulation de la dispersion chromatique inférieure ou égale à 1250 nm.

De préférence, la fibre présente une dispersion chromatique supérieure ou égale à 2 ps/(nm.km) pour une longueur d'onde supérieure ou égale à 1280 nm.

Avantageusement, la fibre présente un coeur d'indice sensiblement constant et une gaine d'indice inférieur à l'indice du coeur.

Dans un mode de réalisation, la fibre présente un coeur d'indice inférieur à l'indice de la silice.

Dans un mode de réalisation, la fibre présente un coeur et une gaine dopés au fluor ou au bore.

De préférence, le coeur de la fibre présente un rayon supérieur ou égal à 4,5 µm.

L'invention concerne encore un système de transmission à multiplexage en longueurs d'onde, comprenant comme fibre de ligne une telle fibre.

D'autres caractéristiques et avantages de l'invention apparaîtront à la lecture de la description qui suit de modes de réalisation de l'invention, donnés à titre d'exemple uniquement, et en référence aux figures, qui montrent :
- figure 1, le profil d'indice d'une fibre selon un premier mode de réalisation de l'invention;
- figure 2, des courbes d'iso-dispersion en fonction du rayon et de la valeur du saut d'indice.

L'invention propose une fibre à saut d'indice, dans laquelle la dispersion chromatique s'annule pour une valeur de longueur d'onde inférieure à 1280 nm, et de préférence pour une valeur de longueur d'onde inférieure à 1250 nm. Elle propose aussi une fibre à saut d'indice dont la dispersion chromatique est supérieure ou égale à 2 ps/(nm.km) pour des longueurs d'onde supérieures à 1280 nm; comme la dispersion chromatique est une fonction croissante de la longueur d'onde pour une fibre à saut d'indice, on assure ainsi que dans toute la bande de transmission du multiplex, la dispersion chromatique est supérieure à 2 ps/(nm.km). Cette valeur permet de limiter les effets non-linéaires entre canaux voisins dans un système de transmission à multiplexage en longueurs d'onde, utilisant la fibre de l'invention comme fibre de ligne.

L'invention permet ainsi d'utiliser de la fibre à saut d'indice pour la transmission de signaux en multiplexage de longueurs d'onde, non seulement autour de 1550 nm, mais aussi autour de 1300 nm, ou plus généralement dans la fenêtre allant de 1280 à 1630 nm.

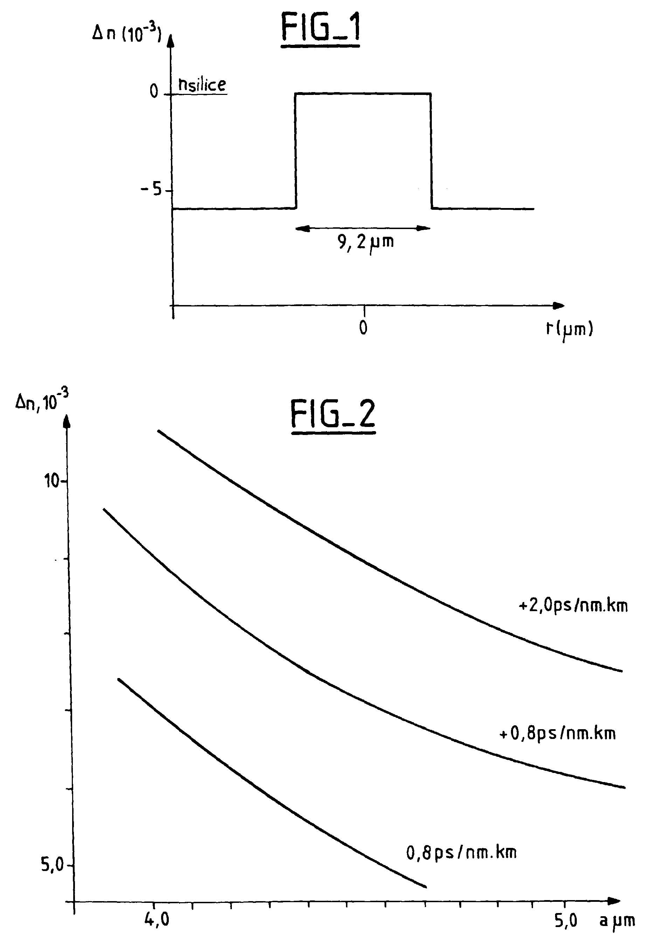

On donne dans la suite de la description en référence aux figures des exemples de profil de fibre permettant d'obtenir de telles valeurs. La figure 1 montre une représentation schématique du profil d'indice d'une fibre selon un premier mode de réalisation de l'invention; dans le mode de réalisation de la figure 1, on modifie les indices de la fibre connue pour faire diminuer la valeur de la longueur d'onde pour laquelle la dispersion chromatique s'annule. La fibre de la figure 1 présente un profil à saut d'indice, à savoir, un coeur d'indice sensiblement constant et supérieur à celui de la gaine qui l'entoure. Dans l'exemple de la figure, la différence entre l'indice du coeur et l'indice de la gaine est de 6.10⁻³, et le rayon du coeur de la fibre est de 4,6 µm.

On a en outre porté à la figure l'indice de la silice. Comme on le voit sur la figure 1, l'indice de la silice est supérieur à celui de la gaine. La différence entre l'indice de la silice et l'indice de la gaine peut prendre une voleur de 6.10⁻³.

La fibre de la figure peut être réalisée en dopant le coeur de la fibre et la gaine avec du fluor, qui présente la propriété d'abaisser la valeur de l'indice, et la valeur de la longueur d'onde λ₀ pour laquelle la dispersion chromatique s'annule. On obtient la fibre de la figure avec des concentrations de fluor dans le coeur de fibre de 1 % en poids. La gaine est encore plus dopée, de sorte à constituer une structure guidante; la concentration de fluor dans la gaine est de 2 % en poids. De telles proportions de dopant peuvent être atteintes avec des technologies de fabrication de fibres telles que le plasma, l'OVD (acronyme de l'anglais "outside vapour phase deposition", dépôt externe en phase vapeur) ou le VAD (acronyme de l'anglais "vapour phase axial deposition" dépôt axial en phase vapeur). On pourrait aussi utiliser comme dopant pour le coeur de la fibre du bore; des concentrations de 13% en poids dans le coeur, et de 2 % en poids de fluor dans la gaine permettent d'obtenir des caractéristiques similaires.

La fibre de la figure 1 présente une longueur d'onde λ₀ d'annulation de la dispersion chromatique de 1270 nm. Ses autres caractéristiques sont les suivantes
- dispersion chromatique à 1300 nm : 2,4 ps/(nm.km);
- pente de dispersion chromatique à 1300 nm: 0,08 ps/(nm².km);
- dispersion chromatique à 1550 nm : 19,5 ps/(nm.km);
- pente de dispersion chromatique à 1550 nm: 0,05 ps/(nm².km);

Les autres caractéristiques de la fibre - longueur d'onde de coupure, atténuation, sensibilité aux courbures et aux micro-courbures sont analogues aux caractéristiques correspondantes de la fibre à saut d'indice connue.

La fibre de l'invention permet de la sorte une transmission à multiplexage en longueurs d'onde, dans la plage de longueurs d'onde de 1300 à 1700 nm.

La figure 2 montre des courbes d'iso-dispersion en fonction du rayon et de la différence d'indice entre le coeur de fibre et la gaine d'une fibre à saut d'indice, autrement dit les lieux des points de même dispersion dans le plan dont les axes sont le rayon du coeur d'une part et la différence d'indice entre le coeur et la gaine d'autre part. Est porté sur l'axe des abscisses le rayon du coeur en micromètres. Est porté sur l'axe des ordonnées la différence entre l'indice de réfraction du coeur et l'indice de réfraction de la gaine, gradué en multiple de 10⁻³. Les courbes montrent la valeur de la dispersion à 1280 nm, pour une fibre à profil à saut d'indice, présentant le rayon posé en abscisse et la valeur de saut d'indice en ordonnées, et une gaine enterrée présentant une différence d'indice de - 10.10⁻³ avec l'indice de la silice.

Comme le montre la figure, la dispersion chromatique augmente lorsque le rayon de coeur augmente, et augmente aussi lorsque la différence entre la gaine et le coeur augmente. Ainsi, on peut aussi augmenter le rayon du coeur de la fibre pour faire diminuer la valeur de longueur d'onde pour laquelle la dispersion chromatique s'annule. Ceci peut être réalisé en combinaison avec la diminution de l'indice décrite en référence à la figure 1, ou indépendamment d'une telle diminution de l'indice.

La fibre de l'invention peut être utilisée comme fibre de ligne pour un système de transmission, notamment pour un système de transmission à multiplexage en longueurs d'onde. La valeur de la dispersion chromatique, entre 1300 et 1700 nm, permet de limiter les effets non-linéaires, et notamment le mélange à quatre ondes entre les canaux voisins. A titre d'exemple, ou pourrait utiliser la fibre de l'invention pour transmettre 400 à 500 canaux, avec un espacement entre deux canaux adjacents de 50 GHz, dans une plage de 1300 à 1600 nm.

Bien entendu, la présente invention n'est pas limitée aux exemples et modes de réalisation décrits et représentés, mais elle est susceptible de nombreuses variantes accessibles à l'homme de lad. Il est clair que le profil de la figure 1 n'est donné qu'à titre d'exemple, et que d'autres profils peuvent permettre d'obtenir des fibres présentant les caractéristiques de l'invention. En particulier, il est possible d'utiliser à la fois le bore et le fluor pour obtenir un profil de fibre du genre de celui de la figure 1; on peut aussi combiner une diminution de l'indice et une augmentation du rayon de coeur, notamment pour diminuer les concentrations de dopant dans la fibre par rapport à l'exemple de la figure 1. Ceci présente l'avantage de permettre de fabriquer la fibre par MCVD (acronyme de l'anglais "modified chemical vapour phase deposition").

## Revendications

1. Une fibre optique à saut d'indice, présentant une longueur d'onde d'annulation de la dispersion chromatique inférieure ou égale à 1250 nm.

2. La fibre selon la revendication 1, caractérisée en ce qu'elle présente une longueur d'onde d'annulation de la dispersion chromatique inférieure ou égale à 1250 nm.

3. La fibre selon la revendication 1 ou 2, caractérisée en ce qu'elle présente une dispersion chromatique supérieure ou égale à 2 ps/(nm.km) pour une longueur d'onde supérieure ou égale à 1280 nm.

4. La fibre selon l'une des revendications 1 à 3, caractérisée en ce qu'elle présente un coeur d'indice sensiblement constant et une gaine d'indice inférieur à l'indice du coeur.

5. La fibre selon la revendication 4, caractérisée en ce qu'elle présente un coeur d'indice inférieur à l'indice de la silice.

6. La fibre selon la revendication 4 ou 5, caractérisée en ce qu'elle présente un coeur et une gaine dopés au fluor ou au bore.

7. La fibre selon l'une des revendications 4 à 6, caractérisée en ce que le coeur présente un rayon supérieur ou égal à 4,5 µm.

8. Un système de transmission à multiplexage en longueurs d'onde, comprenant comme fibre de ligne de la fibre selon l'une des revendications 1 à 7.
